# FASCICULE DE BREVET EUROPEEN

(11) **EP 3 237 123 B1**
(45) Date de publication et mention de la délivrance du brevet: **26.09.2018**
(21) Numéro de dépôt: 15822978.1
(22) Date de dépôt: 16.12.2015
(51) Int. Cl.: B07C 1/04

(54) **INSTALLATION POUR LA SÉPARATION ET L'INDIVIDUALISATION D'OBJETS POSTAUX HÉTÉROGÈNES**
VORRICHTUNG ZUM SEPARIEREN UND VEREINZELN VON HETEROGENEM POSTGUT
DEVICE FOR SEPARATING AND SINGULATING HETEROGENEOUS POSTAL ITEMS

(30) Priorité: 24.12.2014 FR 1463315
(43) Date de publication de la demande: 01.11.2017
(73) Titulaire: Solystic, 92220 Bagneux (FR)
(72) Inventeur: CREST, Karine, 26800 Etoile Sur Rhone (FR); CAMPAGNOLLE, Pierre, 26400 Allex (FR); PETIT, Jacques, 26500 Bourg Les Valence (FR); BLACHE, Richard, 07610 Lemps (FR)
(74) Mandataire: Prugneau, Philippe
(86) Numéro de dépôt international: PCT/FR2015/053545
(87) Numéro de publication internationale: WO 2016/102820

(56) Documents cités:
- WO-A1-2012/163666
- DE-A1-102007 038 834
- US-A- 5 065 237

## Description

### Domaine technique

La présente invention concerne une installation de séparation et d'individualisation d'objets postaux du type petits colis ou paquets.

L'installation selon l'invention est en particulier destinée à être utilisée pour alimenter une machine de tri postal automatique dans laquelle les colis ou paquets individualisés sont déplacés en série à pas constant le long des sorties de tri de la machine et sont aiguillés chacun vers une sortie de tri appropriée en fonction de l'adresse de livraison qui est apposée sur le colis ou paquet.

### Technique antérieure

On connaît des solutions pour la séparation et l'individualisation d'objets selon lesquelles des objets hétérogènes chargés en vrac dans une trémie sont déversés en continu sur des tapis, rouleaux et autres convoyeurs mécaniques et sont égrenés au fur et à mesure de leur déplacement sur ces convoyeurs. Les objets égrenés peuvent ensuite être prélevés un à un pour être mis en série dans un convoyeur à tapis par exemple. Ce type d'installation d'égrenage présente l'inconvénient d'être encombrant.

Dans le domaine postal, les petits colis ou paquets sont des objets essentiellement hétérogènes, à savoir avec des dimensions et des formes très variables et il est important de les mettre en série avec un pas constant, c'est-à-dire avec une distance constante entre le front avant de deux objets consécutifs en série ou entre les centres de deux objets consécutifs, pour pouvoir aiguiller automatiquement et facilement chaque objet vers une sortie de tri d'une machine de tri. Le document DE-A-10 2007 038 834 décrit une installation de séparation et d'individualisation d'objets postaux hétérogènes selon le préambule de la revendication 1.

### Résumé de l'invention

Le but de l'invention est donc de proposer une installation de séparation et d'individualisation d'objets postaux hétérogènes du type petits colis ou paquets qui présente un faible encombrement et qui permet de mettre en série ces objets avec un pas constant en entrée d'une machine de tri postale.

A cet effet, l'invention a pour objet une installation de séparation et d'individualisation d'objets postaux hétérogènes du type petits colis ou paquets, comprenant :
- une plateforme pour stocker temporairement un tas d'objets postaux disposés en vrac,
- un système de vision adapté pour former des images numériques du tas d'objets postaux en vrac qui est statique sur la plateforme,
- une unité de traitement de données adaptée pour, à partir de ces images numériques, identifier un objet postal à individualiser lequel présente une face de préhension non recouverte par un autre objet postal, et apte à fournir des données indicatives de la position spatiale, l'orientation dans l'espace et les dimensions de cette face de préhension,
- et une tête de préhension pneumatique d'un bras robotisé qui est pilotée à partir des dites données pour prendre cet objet postal à individualiser par la face de préhension, et pour déposer cet objet postal sur une zone de dépose hors de la plateforme,
caractérisée en ce que la tête de préhension est à géométrie variable asservie à chaque fois aux dimensions de la face de préhension de l'objet postal à individualiser,

Dans cette installation, les objets postaux sont séparés un à un par le bras robotisé jusqu'au dernier du tas d'objets postaux en vrac sur la plateforme. Un nouveau tas d'objets postaux est ensuite reformé sur la plateforme et les objets postaux de ce nouveau tas d'objets postaux sont séparés un à un comme précédemment. A chaque fois qu'un objet postal est prélevé du tas d'objets postaux, le système de vision forme des images du tas d'objets postaux restant sur la plateforme de manière à déterminer un nouvel objet postal à prélever du tas d'objets postaux stockés sur la plateforme. Le bras robotisé peut déposer chaque objet postal sur un convoyeur à tapis en mouvement à une vitesse fixe prédéterminée, le bras robotisé étant synchronisé avec ce convoyeur à tapis pour que les objets soient disposés en série sur le tapis du convoyeur avec un pas constant.

L'installation selon l'invention peut encore présenter les particularités suivantes :
- la tête de préhension comporte une pluralité de ventouses mobiles individuellement pour s'adapter au profil de la face de préhension,
- la tête de préhension comporte une plaque principale de préhension avec plusieurs ventouses et deux volets articulés respectivement sur deux côtés opposés de la plaque principale et munis chacun également de plusieurs ventouses,
- la tête de préhension est pilotée pour déposer l'objet postal suivant une certaine orientation de sa grande longueur par rapport à un axe de référence, par exemple l'axe longitudinal du convoyeur à tapis.

### Présentation sommaire des dessins

L'invention est exposée ci-après plus en détail et illustrée par les dessins qui représentent un exemple d'installation pour la séparation et l'individualisation de petits colis ou paquets postaux selon l'invention.

La figure 1 est une vue schématique de l'installation selon l'invention avec un bras robotisé.

La figure 2 illustre très schématiquement la tête de préhension du bras robotisé.

### Description des modes de réalisation

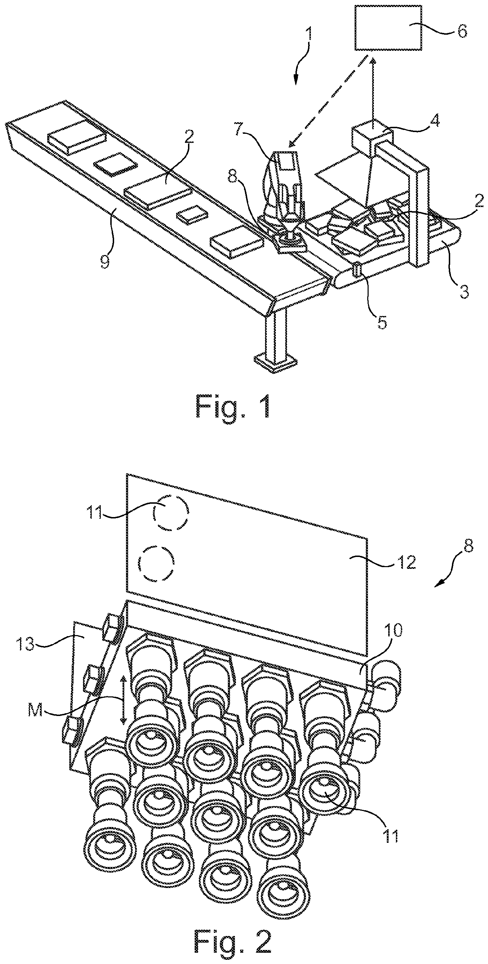

Sur la figure 1 des dessins, l'installation 1 selon l'invention est bien adaptée pour alimenter en petits colis ou paquets 2 un convoyeur, par exemple et non exclusivement dans une machine de tri postal automatique dans laquelle les colis ou paquets 2 sont déplacés en série à pas constant, par exemple à l'aide d'un convoyeur à godets avec des godets dont le fond est fermé par un volet.

Des sorties de tri, par exemple des bacs, sont disposées sous et le long du convoyeur à godets.

Chaque sortie de tri correspond à une certaine destination de livraison postale. En fonction de l'adresse de livraison qui a été lue sur chaque colis ou paquet individualisé, ce colis ou paquet est déchargé d'un godet vers la sortie de tri correspondante en ouvrant automatiquement le volet dans le fond du godet quand le godet surplombe cette sortie de tri.

L'installation de séparation et d'individualisation d'objets postaux selon l'invention comprend ici une plateforme pour stocker un tas d'objets postaux disposés en vrac.

La plateforme est ici constituée par un convoyeur à tapis 3 qui est adapté pour être chargé en amont avec un tas d'objets postaux et amener ce tas d'objets postaux sous un système de vision 4 équipé d'une ou plusieurs caméras.

Une fois que le tas d'objets postaux se trouve sous le système de vision 4, ce qui peut être détecté par un capteur optique 5, le convoyeur à tapis 3 est arrêté et donc le système de vision 4 observe un tas d'objets postaux qui est statique.

Le système de vision est conçu pour former des images numériques de ce tas d'objets postaux statique vu ici de dessus.

Un traitement d'image est effectué sur les images numériques dans une unité de traitement de données 6 qui est aussi une unité de contrôle/commande et de pilotage pour le bras robotisé 7.

L'unité 6 est programmée pour identifier un objet à individualiser du tas d'objets en vrac qui est statique. Cet objet à individualiser est celui qui présente une face de préhension, généralement une face rectangulaire plane, qui n'est pas recouverte par un autre objet du tas d'objets et qui est de préférence orientée en direction du haut du tas d'objets. Cet objet à individualiser peut être par exemple celui qui se situe au sommet du tas d'objets.

L'unité 6 est programmée pour calculer, par une analyse de scène avec profondeur, différentes données indicatives de la position spatiale de cette face de préhension (position spatiale du barycentre de cette face) par rapport à la plateforme 3, l'orientation dans l'espace de cette face de préhension et les deux dimensions (longueur et largeur) de cette face de préhension.

A partir de ces données, l'unité 6 pilote le bras robotisé 7 qui est muni d'une tête de préhension pneumatique 8 pour soulever l'objet à individualiser par la face de préhension et le déposer sur une zone de dépose hors de la plateforme, ici en un emplacement prédéterminé sur convoyeur à plat 9.

Selon l'invention, la tête de préhension 8 est une tête pneumatique à dépression et à géométrie variable, c'est-à-dire à surface de préhension variable. En particulier, sur la figure 2, la tête de préhension comporte une plaque principale 10 munie d'une pluralité de ventouses 11. Ces ventouses 11 peuvent être individuellement mobiles transversalement au plan de la plaque 10 comme illustré par la flèche M pour s'adapter à un profil non planaire de la face de préhension de l'objet à individualiser.

Au moins deux volets articulés (symbolisés par 12, 13) avec chacun muni d'une pluralité de ventouses telles que 11 peuvent être prévus sur deux côtés opposés de la plaque principale 10 de sorte que la surface de préhension de la tête peut être asservie aux dimensions de la face de préhension de l'objet à individualiser en déployant ou en relevant individuellement chaque volet ce qui améliore la préhension de l'objet à individualiser.

Plus particulièrement, l'objet à individualiser peut être saisi avec la plaque principale 11 de la tête de préhension, ou encore avec la plaque principale 11 et un volet 12 déployé (l'autre étant relevé), ou encore avec la plaque principale 11 et les deux volets 12,13 déployés.

A partir des données d'orientation spatiale et de dimension de la face de préhension, l'unité 6 est apte à saisir l'objet à individualiser en orientant la plaque principale 11 dans le sens de la grande longueur de la face de préhension et à déposer cet objet en orientant la grande longueur de sa face de préhension avec l'axe longitudinal du convoyeur à plat 9.

Par ailleurs, l'unité 6 est apte à positionner le barycentre de la plaque principale 10 de la tête de préhension en coïncidence avec le barycentre de la face de préhension de l'objet à individualiser et à faire déposer cet objet par le bras robotisé sur une référence de synchronisation sur le convoyeur à plat 9 pour maintenir un pas constant entre deux objets consécutif sur ce convoyeur à plat.

## Revendications

1. Installation de séparation et d'individualisation d'objets postaux hétérogènes du type petits colis ou paquets(2), comprenant :
- une plateforme (3) pour stocker temporairement un tas d'objets postaux disposés en vrac,
- un système de vision (4) adapté pour former des images numériques du tas d'objets postaux en vrac qui est statique sur la plateforme,
- une unité de traitement de données (6) adaptée pour, à partir de ces images numériques, identifier un objet postal à individualiser lequel présente une face de préhension non recouverte par un autre objet postal, et apte à fournir des données indicatives de la position spatiale, l'orientation dans l'espace et les dimensions de cette face de préhension,
- et une tête de préhension pneumatique (8) d'un bras robotisé (7) qui est pilotée à partir des dites données pour prendre cet objet postal à individualiser par la face de préhension, et pour déposer cet objet postal sur une zone de dépose hors de la plateforme, **caractérisée en ce que** la tête de préhension (8) est à géométrie variable et est asservie à chaque fois aux dimensions de la face de préhension de l'objet postal à individualiser.

2. Installation selon la revendication 1, **caractérisée en ce que** la tête de préhension (8) comporte une pluralité de ventouses (11) mobiles individuellement pour s'adapter au profil de la face de préhension.

3. Installation selon la revendication 2, **caractérisée en ce que** la tête de préhension (8) comporte une plaque principale (10) de préhension avec plusieurs ventouses (11) et au moins deux volets articulés (12, 13) respectivement sur deux côtés opposés de la plaque principale et munis chacun également de plusieurs ventouses.

4. Installation selon l'une des revendications précédentes, **caractérisée en ce que** la tête de préhension (8) est pilotée pour déposer l'objet postal suivant une certaine orientation de sa grande longueur par rapport à un axe de référence.

## Patentansprüche

1. Vorrichtung zum Separieren und Vereinzeln von heterogenen Poststücken des Typs von kleinen Päckchen oder Paketen (2), umfassend:
- eine Plattform (3), um einen Haufen von Poststücken, die lose angeordnet sind, zeitweise zu lagern,
- ein Sichtsystem (4), das geeignet ist, um digitale Bilder des Haufens von losen Poststücken zu bilden, der auf der Plattform statisch ist,
- eine Datenverarbeitungseinheit (6), die geeignet ist, um ausgehend von diesen digitalen Bildern ein zu vereinzelndes Poststück zu identifizieren, das eine Greiffläche aufweist, die nicht von einem anderen Poststück bedeckt ist, und geeignet ist, Daten bereitzustellen, die für die räumliche Position, die Ausrichtung im Raum und die Abmessungen dieser Greiffläche indikativ sind,
- und einen pneumatischen Greifkopf (8) eines Roboterarms (7), der ausgehend von den Daten gesteuert wird, um dieses zu vereinzelnde Poststück durch die Greiffläche zu nehmen und um dieses Poststück auf einem Ablagebereich außerhalb der Plattform abzulegen, **dadurch gekennzeichnet, dass** der Greifkopf (8) von variabler Geometrie ist und jedes Mal von den Abmessungen der Greiffläche des zu vereinzelnden Poststücks abhängig ist.

2. Vorrichtung nach Anspruch 1, **dadurch gekennzeichnet, dass** der Greifkopf (8) mehrere Saugnäpfe (11) aufweist, die einzeln beweglich sind, um sich an das Profil der Greiffläche anzupassen.

3. Vorrichtung nach Anspruch 2, **dadurch gekennzeichnet, dass** der Greifkopf (8) eine Hauptgreifplatte (10) mit mehreren Saugnäpfen (11) und mindestens zwei gelenkigen Klappen (12, 13) jeweils auf zwei gegenüberliegenden Seiten der Hauptplatte aufweist und die jeweils auch mit mehreren Saugnäpfen versehen sind.

4. Vorrichtung nach einem der vorhergehenden Ansprüche, **dadurch gekennzeichnet, dass** der Greifkopf (8) gesteuert wird, um das Poststück nach einer bestimmten Ausrichtung seiner großen Länge in Bezug auf eine Referenzachse abzulegen.

## Claims

1. An installation for separating and singulating non-uniform postal articles of the small parcel or packet type (2), comprising:
• a platform (3) for temporarily storing a pile of loosely placed postal articles;
• a vision system (4) adapted to form digital images of the pile of loose postal articles, which pile is static on the platform;
• a data-processing unit (6) adapted to use these digital images to identify a postal article to be singulated, i.e. an article that has a pickup face that is not covered by any other postal article, the unit being suitable for delivering data indicating the three-dimensional position, the facing direction, and the dimensions of said pickup face; and
• a pneumatic pickup head (8) of a robotized arm (7) that is controlled on the basis of said data to take the postal article to be singulated via its pickup face, and to deposit said postal article on a deposition zone that is off the platform;
said installation being **characterized in that** the pickup head (8) is of variable geometry that is servo-controlled, on each occasion, to the dimensions of the pickup face of the postal article to be singulated.

2. An installation according to claim 1, **characterized in that** the pickup head (8) is provided with a plurality of suction cups (11) that are mounted to be individually movable to match the profile of the pickup face.

3. An installation according to claim 2, **characterized in that** the pickup head (8) has a main pickup plate (10) with a plurality of suction cups (11) and at least two hinged flaps (12, 13) that are hinged to respective ones of two opposite sides of the main plate, and each of which is also provided with a plurality of suction cups.

4. An installation according to any preceding claim, **characterized in that** the pickup head (8) is controlled to deposit the postal article with its long dimension extending in a certain direction relative to a reference axis.
